Europäisches Patentamt

European Patent Office

Office européen des brevets

(19)

(11) Veröffentlichungsnummer: **0 127 035 B1**

(12) # EUROPÄISCHE PATENTSCHRIFT

(45) Veröffentlichungstag der Patentschrift: **30.10.91**

(51) Int. Cl.⁵: **B29C 69/00, B29C 65/00**

(21) Anmeldenummer: **84105349.9**

(22) Anmeldetag: **11.05.84**

(54) **Verfahren zur sicheren Befestigung einer auf einer Aussenfläche eines flächigen Formlings aufgebrachten Auflage im Bereich der Flächenränder und Formwerkzeug hierzu.**

(30) Priorität: 25.05.83 DE 3318901
07.05.84 DE 3416813

(43) Veröffentlichungstag der Anmeldung:
05.12.84 Patentblatt 84/49

(45) Bekanntmachung des Hinweises auf die
Patenterteilung:
30.10.91 Patentblatt 91/44

(84) Benannte Vertragsstaaten:
AT BE CH DE FR GB IT LI LU NL SE

(56) Entgegenhaltungen:
AT-B- 301 852
DE-A- 2 925 500
US-A- 4 036 675

(73) Patentinhaber: **Stange, Gustav**
**Tenholter Strasse 138**
**W-5140 Erkelenz(DE)**

(72) Erfinder: **Stange, Gustav**
**In Tenholt 8**
**W-5140 Erkelenz(DE)**
Erfinder: **Jumpertz, Wilhelm**
**Dohmengasse 3**
**W-5142 Hückelhoven-Brachelen(DE)**
Erfinder: **Burg, Karl-Heinz**
**In Kaulhausen 40**
**W-5140 Erkelenz(DE)**
Erfinder: **Lencer, Dieter**
**Am Driesch 32**
**W-5144 Wegberg(DE)**

(74) Vertreter: **Liermann, Manfred**
**Schillingsstrasse 335**
**W-5160 Düren(DE)**

## Beschreibung

Die Erfindung betrifft ein Verfahren zur sicheren Befestigung einer auf einer Außenfläche eines flächigen Formlings aufgebrachten Auflage im Bereich der Flächenränder, wobei die Auflage mittels eines thermoplastischen Kunststoffes als Verbindungsmedium thermoplastisch oder/und über geeignete Klebemittel auf dieser Außenfläche befestigt ist, wobei mindestens die Auflage in einer ersten Umbiegung gegen eine Stirnseite des Flächenrandes gelegt wird.

Zum Beispiel Innenverkleidungen von Kraftfahrzeugtüren werden als Rohling zunächst aus einem geeigneten Werkstoff, vorzugsweise thermoplastisch formbarem Kunststoff, hergestellt und danach zur Erzielung der gewünschten Oberflächenstruktur in einem weiteren Arbeitsgang mit einer Auflage belegt, wobei dann diese Auflage an den Stirnseiten des Rohlings um- und angelegt wird und entweder vorher oder anschließend so abgetrennt wird, daß nur die Stirnseite des Rohlings belegt bleibt.

Eine solche Sicherung der Auflage hat sich jedoch als nicht genügend haltbar erwiesen. An den umgelegten Rändern löst sich die Auflage und schon nach kürzester Zeit z.B. durch Temperatureinflüsse, ist die Innenverkleidung unansehnlich.

Um dem beschriebenen Mangel abzuhelfen, hat man auch schon das Auflagenmaterial über die Stirnseite des Rohlings hinaus bis auf dessen Rückseite umgebogen und dort geklammert oder geklebt (DE-A1 29 25 500). Diese Methode ist aber einerseits aufwendig und kostenintensiv und andererseits wenig haltbar, weil das Auflagenmaterial an den Klammern ausreißt bzw. sich nach Temperaturschwankungen ablöst.

Der Erfindung liegt somit die Aufgabe zugrunde, ein Verfahren der eingangs beschriebenen Art vorzuschlagen, mit welchem die Befestigung der Auflage eines Rohlings bzw. Formlings im Bereich der Flächenränder verbessert wird.

Erfindungsgemäß ist diese Aufgabe ausgehend von einem Verfahren der eingangs beschriebenen Art, gemäß dem kennzeichnenden Teil des Anspruchs 1 dadurch gelöst, daß gleichzeitig mit einer weiteren Umbiegung der Auflage der Formling, ausgehend von der Stirnseite, um mindestens die Dicke der Auflage verdrängt und die Auflage gegen die durch die Verdränung entstandene Außenfläche angelegt wird, nachdem zuvor eventuelle Überstände mindestens der Auflage auf Maß abgeschnitten wurden. Bei entsprechender maßlicher Abstimmung von Formling und Auflage gewährleistet die doppelte Umbiegung bei gleichzeitiger Verdrängung der beschriebenen Art um mindestens die Dicke der Auflage und deren Anlage gegen die durch die Verdrängung entstandene Außenfläche eine sichere und haltbare Umfassung des Randes des Formlings. Hierdurch wird ohne Mehraufwand an Arbeit oder Zeit eine besonders innige Befestigung der Auflage erreicht. Da der Formling im Ausgangszustand bereits mit der Auflage verbunden ist, können bei der Umfassung des Randes die gleichen Bindemittel für die Verbindung der Auflage mit dem Formling in diesem Bereich verwendet werden. Eine nachfolgende Beschichtung des Formlings als Rohling und nachfolgendes manuelles Umsäumen des Randes ist nicht erforderlich.

Es kann aber auch das Umlegen der Auflage bis auf die Rückseite des Formlings entfallen. Es ist zunächst nur ein Umbiegen der Auflage um die Stirnseite des Formlings erforderlich, worauf die Auflage ohne Rest für eine weitere Umbiegung abgetrennt werden kann. Nachfolgend wird dann die stirnseitig umgelegte Auflage in den Werkstoff des Rohlings stirnseitig hineingequetscht. Hierdurch verschwindet jede Kante, an der sich die Auflage vom Formling lösen könnte. Gleichzeitig wird die Auflage intensiv mit dem Werkstoff des Formlings verbunden und außerdem durch die Einquetschung in diesen Werkstoff eingeklemmt.

Eine andere Ausgestaltung des erfindungsgemäßen Verfahrens sieht vor, daß nach der ersten Umbiegung ein die Weiterverarbeitung störender Überschuß der Auflage abgetrennt und danach die weitere Umbiegung durchgeführt wird. Hierdurch kann die maßliche Abstimmung der Auflage in wesentlich größeren Toleranzen durchgeführt werden, weil überschüssiges Material abgetrennt wird. Hierduch wird die Vorbereitung vereinfacht, ohne daß die Qualität des Ergebnisses leidet.

Eine andere Ausgestaltung des erfindungsgemäßen Verfahrens wiederum sieht vor, daß sich der weiteren Umbiegung ein weiterer Abtrennvorgang anschließt. Hierdurch kann eine weitere Vergröberung der Maßtoleranzen für die Auflage erreicht werden und es wird dennoch eine präzis auf Maß abgetrennte Umsäumung erreicht, ohne Einbuße in der Arbeitsqualität.

Eine weitere Ausgestaltung erfindungsgemäßen Verfahrens, bei dem der Formling und die Auflage an den Rändern ein Übermaß aufweisen, sieht vor, daß die Auflage durch Querverschiebung umgebogen wird, wobei gleichzeitig der überschüssige Werkstoff des Formlings ohne Abtrennung vom Formling gegen eine Stützfläche geschoben und mit der Auflage verpreßt wird, bevor nachfolgend die Auflage neuerlich umgebogen und hierbei zusammen mit dem überschüssigen Werkstoff des Formlings durchschnitten wird.

Es wird also gleichzeitig mit der Querverschiebung der Auflage das überstehende Material des Formlings verdrängt. Durch die nachfolgende Verpressung der Auflage in dem Verdrängungsbereich mit dem verdrängten Teil des Formlings werden günstige Schnittbedingungen für die Abtrennung des überschüssigen Auflagenmaterials geschaffen.

Diese Verfahrensweise erweist sich als besonders günstig dann, wenn die Auflage Textilfasern enthält oder aus Textilfasern besteht. Durch die Verpressung dieser Fasern mit dem überschüssigen Werkstoff des Formlings werden diese Fasern am Übergang zwischen dem Formling und dem noch nicht abgetrennten überschüssigen Werkstoff des Formlings stramm gehalten und sind außerdem mit einer Stützunterlage versehen, so daß sie sich zusammen mit dieser Stützunterlage besonders gut durchtrennen lassen.

Eine weitere Ausgestaltung sieht vor, daß mindestens die Auflage nach der ersten Umbiegung im Bereich der ersten Umbiegekante abgestützt wird. Mit dieser einfachen Maßnahme kann ein Ausbeulen der Umbiegekante verhindert werden.

Eine weitere Aufgabe der Erfindung ist in der Schaffung eines geeigneten Formwerkzeuges zur Durchführung des erfindungsgemäßen Verfahrens zu sehen. Hierbei wird ausgegangen von Formwerkzeugen mit mindestens einem als Formnegativ und einem als Formpositiv ausgebildeten Formteil, die relativ zueinander zum Schließen der Form verschiebbar angeordnet sind.

Formwerkzeuge der genannten Art sind bereits bekannt geworden bei der Herstellung der Rohlinge der genannten Art. Sie weisen jedoch keinerlei Einrichtungen für eine geeignete Umbiegung und Befestigung der Auflage solcher Rohlinge oder Formlinge im Bereich der Ränder auf.

Mit der Erfindung soll daher ein Werkzeug vorgeschlagen werden, welches zur Durchführung des erfindungsgemäßen Verfahrens geeignet ist und welches in der Lage ist, in einem einzigen Arbeitsschritt aus einem flachen, mit einer Auflage beschichteten Rohling einen Formling mit von der Auflage umfaßtem Rand herzustellen. Hierbei wird ausgegangen von einem Formwerkzeug der beschriebenen Art und einem mit einer Auflage versehenen Rohling, der in das Formwerkzeug eingebracht wird.

Die Aufgabe zur Gestaltung des Formwerkzeugs ist erfindungsgemäß dadurch gelöst, daß über einer Druckplatte eine Trägerplatte für mindestens ein Formteil und zwischen beiden mindestens eine entfernbare Distanzeinrichtung angeordnet ist, während ein das Gegenstück zum ersten Formteil bildendes Formteil auf einer der ersten Druckplatte gegenüberliegenden weiteren Druckplatte angeordnet ist und wobei ein Flachschieber verschiebbar zwischen der Trägerplatte und der weiteren Druckplatte angeordnet ist und mit dieser eine Hubbewegung zur Erzeugung einer Relativbewegung zwischen dem zugeordneten Formteil und einem auf der ersten Druckplatte stationär angeordneten weiteren Verformungselement ausüben kann, wobei der Stirnseite des Flachschiebers im gegenüberliegenden Formteil eine Nut zugeordnet ist als Freiraum für mindestens nach der ersten Umbiegung überstehendes Material der Auflage, deren äußere obere Kante der Nut eine Schneidkante bildet und wobei das weitere Verformungselement eine profilierte Stirnseite aufweist zur Verdrängung und Formung des Werkstoffes des Formlings zusammen mit der Auflage.

Ausgehend von dem beschriebenen Formwerkzeug sorgen die verschiedenen Verformungselemente dafür, daß bei geschlossenem Werkzeug zur Formung des Formlings durch eine geeignete Verschiebung der Verformungselemente die Umbiegung der Auflage in der gewünschten Weise erfolgt. Es ist also erforderlich, daß bei dem Formwerkzeug die Verformungselemente bei geschlossenem Werkzeug verschiebbar angeordnet sind. Zwar sind auch bei herkömmlichen Formwerkzeugen verschiebbare Elemente bekannt, diese werden jedoch nur zur Herstellung der Form verschoben und stehen während der Herstellung des Formlings still. Gleiches gilt für bei solchen Formwerkzeugen an sich bekannten sogen. Auswerfern. Diese bewegen sich nach der Herstellung des Formlings, um diesen nach oder während der Öffnung der Form aus der Form auszuwerfen. Nach der Erfindung jedoch sollen Verformungselemente vorgesehen sein, die bei geschlossener Form bewegbar sind und am Formling arbeiten, also die Gestalt des Formlings durch ihre Bewegung in gewünschter Weise verändern. Durch den Freiraum wird es möglich, den Rohling und die Abmessungen der Auflage in größerer Toleranz vorzubereiten, wodurch erreicht werden kann, daß die Positioniergenauigkeit des Rohlings in der Form relativ grob gewählt werden kann, wodurch wiederum die entsprechenden Einrichtungen vereinfacht werden. Auch einen solcherart grob zugeschnittenen und grob positionierten Rohling kann die Form einwandfrei zu einem Formling gewünschter Abmessungen verarbeiten, wobei der Flachschieber für die Randbegrenzung des Formlings sorgt und die Auflage im Bereich der Stirnseite des Formlings umlegt, wobei dann ein Zuviel an Auflagenmaterial in der dem Flachschieber zugeordneten Nut untergebracht werden kann und in dieser Lage bereit liegt für den nächsten Umbiegeschritt durch das zweite Verformungselement.

Dadurch, daß das weitere Verformungselement eine profilierte Stirnseite aufweist, mindestens zur Verdrängung und Formung des Werkstoffs des Formlings mit der Auflage, gelingt es, das zugeordnete Formteil glatt zu halten und einen notwendigen Freiraum in der Form selbst für das noch umzubiegende Auflagenmaterial zu vermeiden. Die Form insgesamt wird hierdurch in ihrem Aufbau stark vereinfacht. Dadurch, daß die äußere obere Kante der Nut eine Schneidkante bildet, gelingt es, das Auflagenmaterial nach der gewünschten vollständigen Umfassung der Kante des Formlings auf Maß abzuschneiden. Eine entsprechende maßlich genaue Vorbereitung des Auflagenmaterials kann damit entfallen. Das aus dem ersten Umbiegeprozeß grob zugeschnittene Auflagenmaterial wird an dieser Schneidekante auf Maß nach dem letzten Umbiegeschritt abgetrennt.

Bei dieser Gestaltung kann mindestens das erste Verformungselement als kraftbetätigter Flachschieber ausgebildet sein, mit einer schiebenden Stirnseite und einer Flachseite, mit der die Auflage gegen die Stirnseite des Flächenrandes des Formlings angelegt wird. Bei einer solchen Gestaltung des ersten Verformungselementes ist es durch einfaches Gegenschieben möglich, die Auflage um die Stirnseite des Formlings herzumzulegen und gegen die Stirnseite anzudrücken. Das Umlegen der Auflage wird hierbei von der schiebenden Stirnseite des Flachschiebers bewirkt, während das Andrücken der Auflage von der Flachseite des Flachschiebers bewirkt wird, der gleichzeitig damit den Rand des Formlings gestaltet und den Formling begrenzt.

Nach einer ergänzenden Ausgestaltung der Erfindung ist noch vorgesehen, daß die äußere untere Kante der Nut eine von der Stirnseite des Flachschiebers beaufschlagte Schneidkante bildet, zum Abtrennen mindestens von stark überschüssigem Auflagenmaterial der Auflage. Hierdurch wird es möglich, weit gröbere Toleranzen des Rohlings zuzulassen, da auch so weit überstehendes Material, das nirgendwo mehr verwendet werden kann, an der Schneidkante einfach abgetrennt wird, damit es bei dem nachfolgenden Arbeitsschritt nicht hinderlich ist und bis zum Öffnen der Form im Formwerkzeug verbleibt und danach als Abfall entfernt wird.

Eine weiterbildende Ausgestaltung der Erfindung sieht noch vor, daß die Schneidkante gegenüber der Ebene der Relativverschiebung zwischen dem weiteren Verformungselement und den Formteilen um einen kleinen Betrag zurückversetzt ist. Hierdurch wird verhindert, daß das weitere Verformungswerkzeug das Auflagenmaterial an der Schneidkante packt und mitnimmt und hierdurch die Gefahr von Materialquetschungen an der falschen Stelle entsteht. Wenn die Schneidkante etwas zurückliegt, kann das weitere Verformungselement störungsfrei seine Umbiegefunktion erfüllen, ohne an der falschen Stelle Auflagenmaterial zu quetschen.

Das Profil der Stirnseite kann etwa das Profil eines Stuhls sein, wobei die Stuhllehne mit ihrer Rückseite an einem zugeordneten Formteil entlanggleiten kann und im übrigen hierbei stirnseitig in den Formling soweit eindringt und dabei die Auflage des Formlings mindestens umbiegt, bis die Stuhlfläche an der Stirnseite des Formlings zur Anlage gebracht ist. Hierdurch wird zusätzlich der Vorteil erreicht, daß durch die Verdrängung des Grundmaterials des Formlings ein Auswölben der Stirnseite des Formlings verhindert wird. Es wird die Auflage in gewünschter Weise umgelegt und die Stirnseite bleibt glatt nach Fertigstellung.

Das weitere Verformungselement kann auch seitlich eine solche Lage einnehmen, daß bei einer Relativbewegung von Verformungselement und Formteilen die Stirnseite des Verformungselementes in die mit der Auflage belegte Stirnseite des Formlings eindringt. Unter der Voraussetzung, daß das Auflagenmaterial an der Stirnseite um- und angelegt ist und dann auf Maß geschnitten wurde, wird durch die genannten Merkmale vorteilhafterweise erreicht, daß nunmehr stirnseitig das dort befindliche Auflagenmaterial in den Grundwerkstoff des Formlings hineingequetscht wird. Nach dem Rückzug des hierfür notwendigen weiteren Verformungselementes klemmt der Grundwerkstoff des Formlings nun das Auflagenmaterial fest ein. Hierdurch ist zuverlässig jede Kante, an der sich das Auflagenmaterial lösen könnte, beseitigt. Ein zusätzlicher Aufwand in Bau oder der Konstruktion des Formwerkzeugs ist hierfür nicht erforderlich.

Es ist sinnvoll, wenn das Formteil eine in den Freiraum einmündende Öffnung aufweist zur Heranführung von Unterdruck und/oder Überdruck oder mechanischen Stößeln. Hierdurch wird die Beherrschung des Überschußmaterials erleichtert.

Die Erfindung soll nun anhand der beigefügten Zeichnungen, die Ausführungsbeispiele des erfindungsgemäßen Formwerkzeugs zeigen, näher erläutert werden.

Es zeigen:

| | |
|---|---|
| Figur 1 | Querschnitt durch die wesentlichen Teile des Werkzeugs |
| Figur 2, a, b, | Einzelheit X nach Figur 1, jedoch bei vorgefahrenem Flachschieber; a, b, als Varianten |
| Figur 3 | Einzelheit Y nach Figur 1, jedoch mit verschobenem zweiten Verformungselement und anderer Stirnkontur des Verformungselements |
| Figur 4 | Variante von weiterem Verformungselement, Formteil und Flachschieber in einer Ausschnittdarstellung ähnlich wie Figur 3 |
| Figur 5 | Querschnitt wie Figur 1 jedoch in alternativer Gestaltung |
| Figur 5a, 6,7 | Einzelheit X $_1$ nach Figur 5 in unterschiedlichen Arbeitspositionen |
| Figur 6a | Stellung wie Figur 6 jedoch mit besonderen Spaltabmessungen |

Auf einer Druckplatte 1 ist senkrecht zur Druckplatte 1 im wesentlichen ein Tragbolzen 26 und ein Führungsbolzen 27 angeordnet. Oberhalb der Druckplatte 1 und von einer Distanzeinrichtung 4 auf geeigneten Abstand hierzu gehalten, ist parallel zur Druckplatte 1 eine Trägerplatte 2 angeordnet. Die Trägerplatte 2 weist durchgehende Bohrungen 28 und 29 auf, wobei durch die Bohrung 28 der Tragbolzen 26 mit ausreichendem Spiel hindurchgeführt ist, während in der Bohrung 29 eine Führungsbüchse 30 angeordnet ist, in welcher der Führungsbolzen 27 verschiebbar geführt ist. Die Trägerplatte 2 kann damit gegenüber der Druckplatte 1 in Richtung des Pfeiles 31 relativ verschoben werden. Damit hierbei eine sichere Führung der Trägerplatte 2 gewährleistet ist, ist es zweckmäßig, an geeigneter Stelle mindestens einen weiteren Führungsbolzen nach Art des Führungsbolzens 27 auf der Druckplatte 1 vorzusehen und in der Trägerplatte 2 zu führen. Zur Durchführung der beschriebenen Hubbewegung muß die Distanzleiste 4 zunächst entfernt werden.

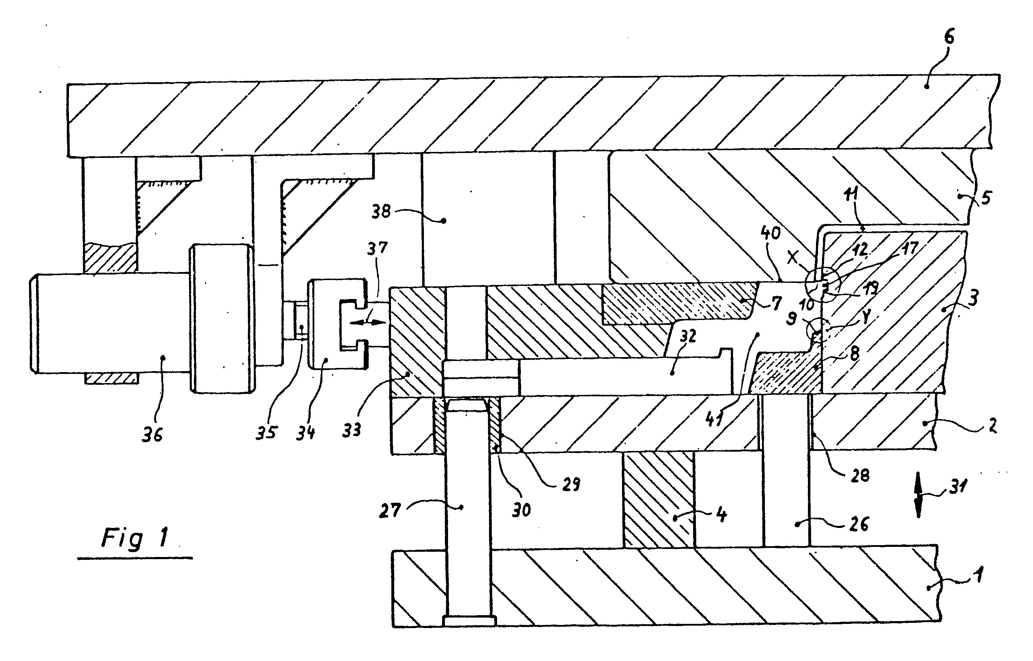

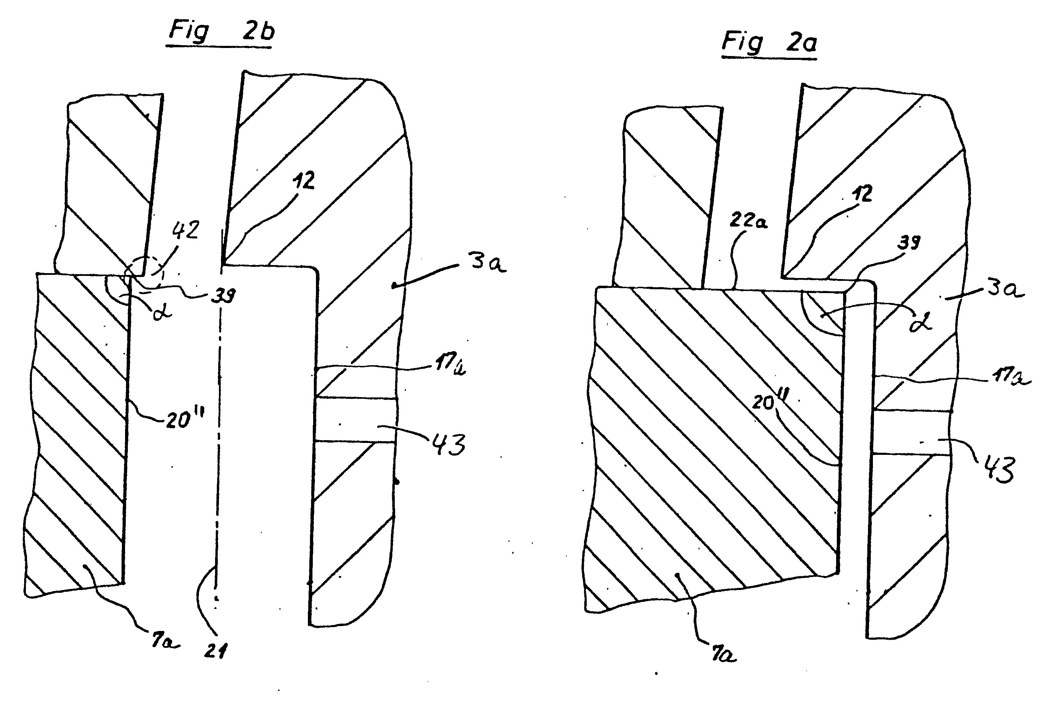

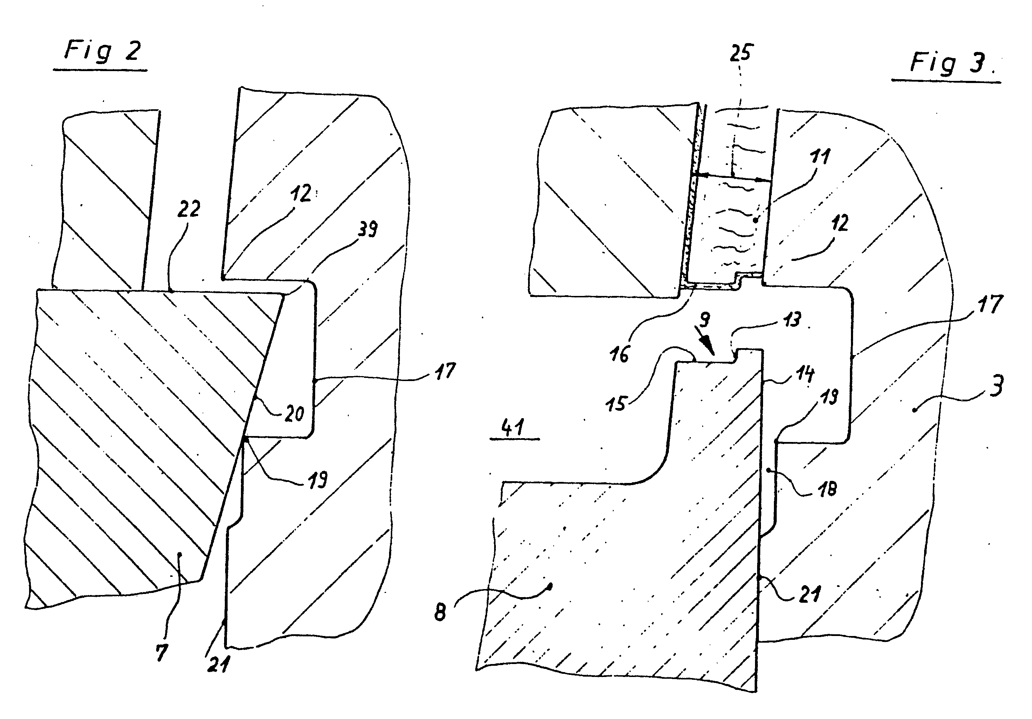

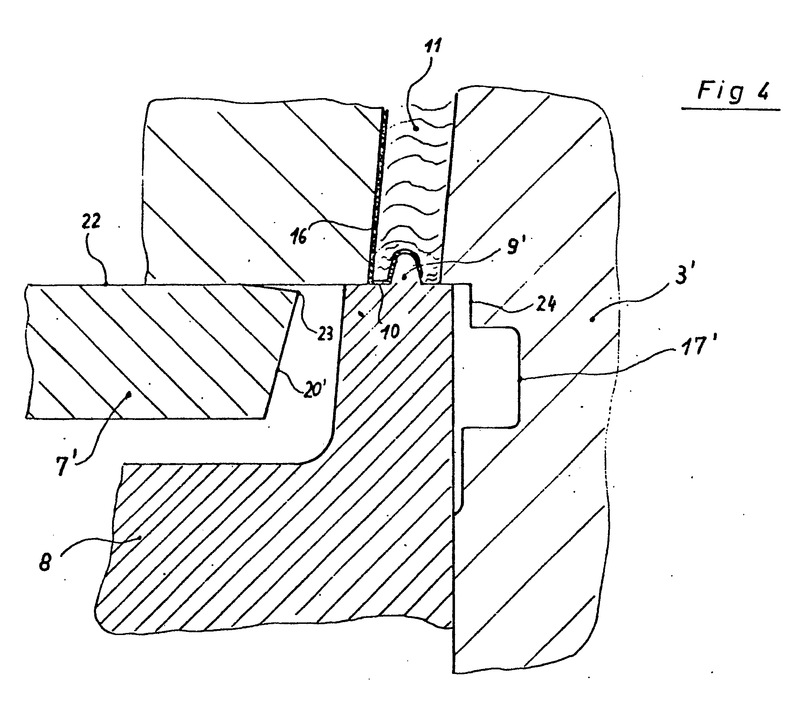

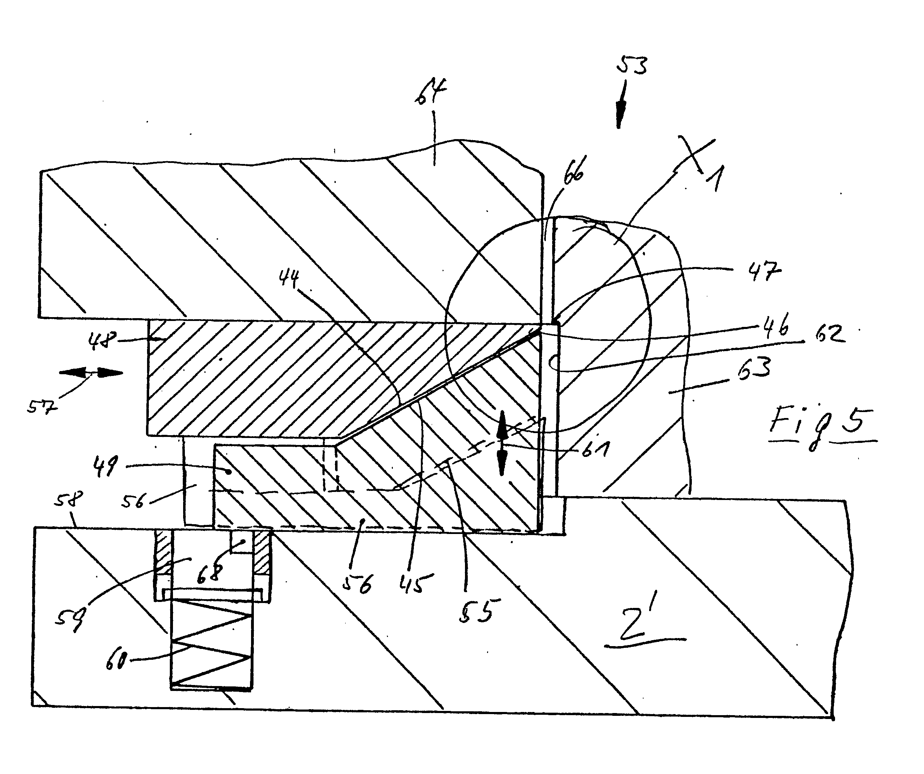

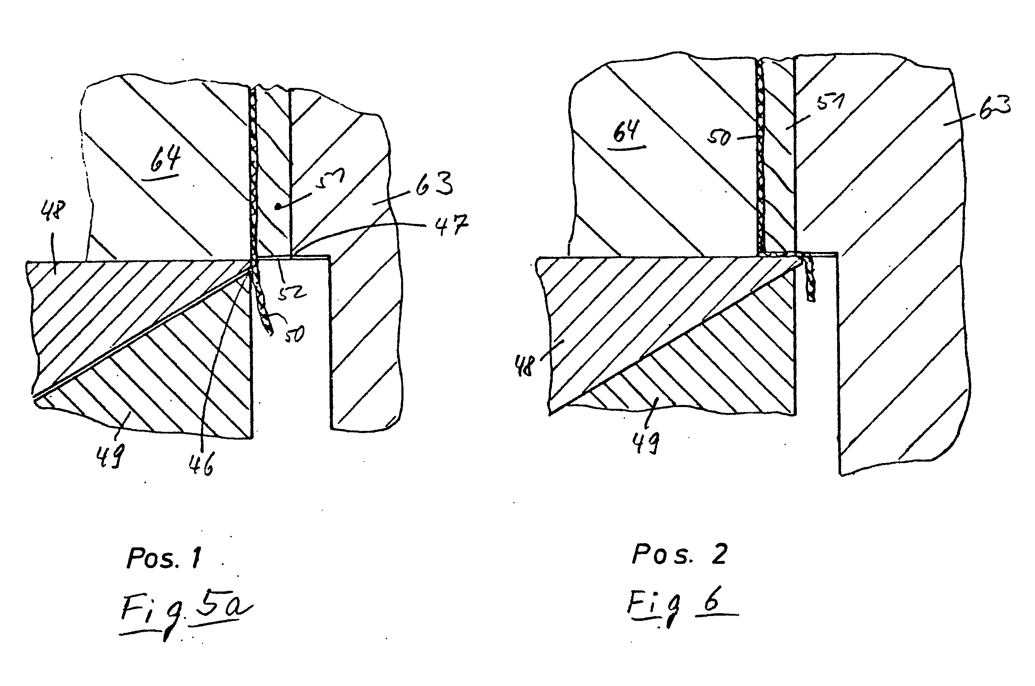

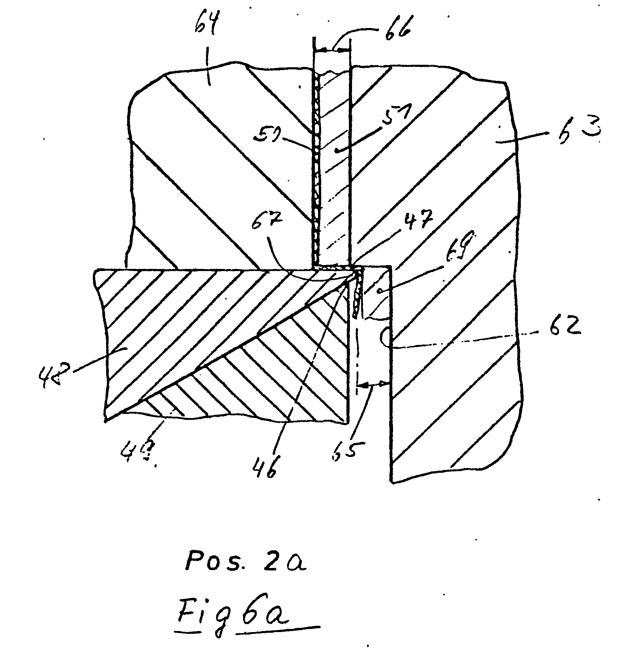

Auf der Trägerplatte 2 ist auf der der Druckplatte 1 abgewandten Fläche ein Formteil 3 angeordnet, dem gegenüber ein Formteil 5 auf einer Druckpaltte 6 angeordnet ist. In der in Figur 1 dargestellten zusammengefahrenen Situation bleibt zwischen dem Formteil 3 und dem Formteil 5 ein Spalt übrig, der dem Volumen und der Form des gewünschten Formlings 11 entspricht. Im Bereich des Randes des Formlings, da wo die Stirnseite 10 des Formlings 11 gebildet werden soll, weist das Formteil 3 eine Nut 17 oder einen Freiraum 17a (Fig. 2a, 2b) auf. Diese Nut 17 bzw. der Freiraum 17a hat eine obere Schneidkante 12 und eine untere Schneidkante 19, wobei letztere gegenüber einer Ebene 21 um einen kleinen Betrag 18 zurückversetzt ist. An der Ebene 21 liegt ein Verformungselement 8 an, welches auf der Oberseite des Tragbolzens 26 und auf der der Druckplatte 1 abgewandten Seite der Trägerplatte 2 angeordnet ist.

Seitlich neben dem Verformungselement 8 ist ein Führungsstück 32 auf der Trägerplatte 2 befestigt. Das Führungsstück 32 führt und stützt einen Mitnehmer 33, der mit dem Flachschieber 7 oder 7' oder 7ai verbunden ist, welcher an seinem vorderen Ende ebenfalls vom Führungsstück 32 abgestützt werden kann. Das Führungsstück 33 ist mit einer geeigneten Kupplung 34 verbunden, die ihrerseits mit dem Gewindekopf der Kolbenstange eines Betätigungszylinders 36 verbunden ist. Der Betätigungszylinder 36 ist hierbei über geeignete Zwischenstücke und Verbindungsmittel mit der Trägerplatte 2 verbunden. Er ist daher in der Lage, deren Hubbewegung mitzumachen. Die Kolbenstange des Betätigungszylinders 36 kann eine Hubbewegung in Richtung des Pfeiles 37 machen und hierdurch den Flachschieber 7(7',7a) in gleicher Richtung verschieben. Hierbei ist, wie Figur 1 entnommen werden kann, der Flachschieber 7 zwischen dem Führungsstück 32, und dem Formteil 5 geführt. Hierbei sorgt im zusammengefahrenen Zustand des Formwerkzeugs ein Anschlagblock 38 dafür, daß der notwendige Abstand eingehalten wird und keine Verklemmung auftritt.

Ein in der beschriebenen Weise im wesentlichen aufgebautes Werkzeug kann wie folgt arbeiten.

Zunächst sind in Ausgangsposition die Formteile 3 und 5 durch Aufwärtsfahren des Formteils 5 und der Druckplatte 6 geöffnet und ein Rohling, der bereits mit einer Auflage versehen ist, wird zwischen die Formteile 3 und 5 eingebracht. Dieser Rohling ist thermoplastisch verformbar und kommt in heißem und damit sehr weichem Zustand an. Er nimmt durch Auflegen auf das Formteil 3 bereits angenähert dessen Kontur an. Der Rohling ist nicht genau zugeschnitten sondern weist an den Rändern ein gewisses Übermaß auf. Nach der Ablage des Rohlings auf das Formteil 3 wird die Druckplatte 6 und damit das Formteil 5 abgesenkt und die Form durch Auffahren auf die beschriebenen Anschläge mit für die Herstellung des Formlings notwendiger Kraft geschlossen.

Nachdem die Form solcherart geschlossen ist, ist bereits ein Formling 11 entstanden, der jedoch noch überstehende Ränder aufweist. Es wird nun zunächst der Flachschieber 7 durch Betätigung des Betätigungszylinders 6 in Richtung auf das Formteil 3 so lange verfahren, bis die Stirnseite 20 des Flachschiebers 7 an der Schneidkante 19 der Nut 17 mit der vom Betätigungszylinder 36 ausgeübten Kraft anliegt. In dieser Stellung ragt die Spitze 39 des Flachschiebers 7 in die Nut 17 hinein. Durch die Verschiebung des Flachschiebers 7 entlang der Unterkante 40 des Formteils 5, hat zunächst im Bereich des Formlings 11 die Spitze 39 die Auflage 16 des Formlings 11 erreicht und umgedrückt und dabei gleichzeitig das dickere Grundmaterial des Formlings 11 verschoben und sowohl Material der Auflage 16 als auch Grundmaterial des Formlings 11 in die Nut 17 hineingeschoben Die Flachseite 22 des Flachschiebers 7 hat hierbei das Material der Auflage 16 glatt gegen die Stirnseite 10 des Formlings angedrückt. Grundmaterial des Formlings 11 und zu weit überstehendes Material der Auflage 16, sind hierbei von der Stirnseite 20 des Flachschiebers 7 an der Schneidkante 19 abetrennt worden und können hierbei ggfls. in den Freiraum 41 des Werkzeuges hineinfallen. In der beschriebenen Stellung hat der Flachschieber 7 seine Aufgabe als erstes Verformungselement zum Umbiegen der Auflage 16 und zum Anlegen dieser Auflage gegen die Stirnseite 10 und ggfls. zur Bildung dieser Stirnseite und zum Abtrennen von überschüssigem Material erfüllt. Er wird nunmehr vom Betätigungszylinder 36 in seine Ausgangslage zurückgezogen. Hierbei bleibt das Material der Auflage 16 an der Stirnseite 10 des Formlings 11 haften und das ggfls. in die Nut 17 hineingedrückte Material verbleibt ebenfalls dort, wobei in diesem Zustand die Auflage 16 bis zur Schneidkante 19 reicht.

Nachdem der Flachschieber 7 seine zurückgezogene Ausgangslage erreicht hat, wird die Distanzleiste 4 entfernt und der gesamte, von der Druckplatte 6 und der Trägerplatte 2 begrenzte, Werkzeugblock abwärts bis zur Anlage der Trägerplatte 2 an die Druckplatte 1 gefahren und in dieser Stellung mit dem notwendigen Preßdruck zusammengedrückt, um die endgültige Kontur und Oberflächenstruktur des Formlings 11 zu erreichen. Bei dieser Abwärtsbewegung bleibt jedoch das Verformungselement 8 stationär in seiner relativen Lage zur Druckplatte 1, so daß es an der Ebene 21 entlang relativ zum Formteil 3 aufwärts gleitet.

Zur Um- und Verformung weist das Verformungselement 8 eine Stirnseite 9 auf, mit einem Profil etwa von der Form eines Stuhles. Hierbei gleitet die Rückseite 14 der Stuhllehne 13 an der Ebene 21 aufwärts. Da die Schneidkante 19 am Formteil 3 um den kleinen Betrag 18 zurückversetzt angeordnet ist, kann die Stuhllehne 13 mit ihrer Oberkante an dem bis zur Schneidkante 19 reichenden Werkstoff vorbeifahren, ohne diesen zu berühren und ungewollt mit nach oben zu schleppen.

Bei ihrem Aufwärtshub kommt die Stuhllehne 13 mit der Auflage 16 in Berührung und schiebt diese ebenfalls in der gewünschten Richtung aufwärts und dringt hierbei gleichzeitig, -wie dies in Figur 3 dargestellt ist, in den Grundwerkstoff des Formlings 11 ein, so daß dieser im Bereich des Eindringens in seiner Dicke 25 um die Dicke der Stuhllehne 13 vermindert wird. Nach entsprechender Eindringtiefe kommt auch die Stuhlfläche 15 an der Stirnseite 10 des Formlings 11 zur Anlage, so daß diese Stirnfläche 10 wieder entsprechend profiliert wird und nunmehr die Auflage 16 entsprechend der Stuhlkontur verformt ist. In dieser Stellung wird die Auflage 16 von der Stuhllehne 13 an der Schneidkante 12 sauber abgetrennt, so daß nunmehr die gesamte Stirnseite 10 des Formlings 11 von der Auflage 16 umfaßt ist. Der gesamte, von der Druckplatte 6 und der Trägerplatte 2 eingeschlossene Block, kann nun wieder aufwärts in seine Ausgangsposition gefahren und danach durch weiteres Aufwärtsfahren der Druckplatte 6 mit dem Formteil 5 die Form zur Entnahme des fertigen Formlings geöffnet werden. Bei geöffneter Form kann auch der in der Nut 17 verbliebene Abfall entfernt werden.

Da das entscheidende Kriterium nicht unbedingt die vollständige Umfassung der Stirnseite 10 des Formlings 11 mit der Auflage 16 sein muß, sondern in aller Regel vielmehr die sichere Befestigung der Auflage 16 im Bereich der Ränder des Formlings 11 ist, kann auch eine Befestigung der Auflage 16 in der in Figur 4 dargestellten Weise erfolgen. Die Arbeitsfolge der Einzelteile ist hierbei so wie bereits beschreiben, jedoch kann es zweckmäßig sein, überschüssiges Material vom Flachschieber 7' nicht wie bisher an der unteren Schneidkante 19 der Nut 17 abtrennen zu lassen, sondern vielmehr sollte der Flachschieber 7' an seiner Stirnseite 20' in eine Schneidkante 23 übergehen, die mit einer Schneidfläche 24 zusammenarbeitet, die oberhalb einer Nut 17' in einem an sonsten dem Formteil 3 entsprechenden Formteil 3' vorgesehen ist. Die Schneidkante 23 sollte hierbei zunächst mit einer leicht geneigten Fläche in die Flachseite 22 des Flachschiebers 7' einmünden, um eine ungewollte und zu frühe Abtrennung des umzubiegenden Materials der Auflage 16 zu verhindern.

Es wird auch bei einer Ausführung nach Figur 4 im zusammengefahrenen Zustand des Formwerkzeugs zunächst der Flachschieber 7' in Richtung des Formteils 3' vorgefahren. Er biegt hierbei das Material der Auflage 16 um und legt es gegen die Stirnseite 10 des Formlings an, wobei auf dem Verschiebeweg des Flachschiebers 7' die Schneidkante 23 an der Schneidfläche 24 zur Anlage kommt und dort überschüssiges Material abtrennt, das sich in die Nut 17' einlegen kann. In der Ausführungsform nach Figur 4 ist jedoch die Stirnseite 9' des Verformungselementes 8 anders als bisher beschrieben geformt. Die Stirnseite 9' weist vielmehr eine Nase auf, die beidseitig in flache Bereiche übergehen kann. Bei der bereits beschriebenen Bewegung des Verformungselementes 8 relativ zum Formteil 3 bzw. 3', dringt diese Nase stirnseitig in gewünschter Seitenlage, z.B. mittig, in die Stirn 10 des Formlings 11 ein und treibt dabei auch die Auflage 16 in den so gebildeten Spalt hinein. Nach genügender Eindringtiefe kommen die flachen Übergänge der beschriebenen Nase zur Anlage an die Stirn 10 des Formlings 11 und formen diese wieder glatt und eben. Das Verformungselement 8 und damit die beschriebene Nase an dessen Stirnseite 9', können nunmehr zurückgezogen werden. Nach dem beschriebenen Rückzug verbleibt das Auflagenmaterial in der gebildeten Kerbe in der Stirnseite 10 des Formlings 11. Auch hierdurch ist eine genügend weite Umbiegung der Auflage 16 erreicht, um die Auflage 16 an den Kanten lösungssicher zu befestigen. In vielen Fällen ist in der in Figur 4 dargestellten und hierzu beschriebenen Methode sogar damit zu rechnen, daß nach Rückzug der beschriebenen Nase sich wegen der thermoplastischen Eigenschaften des Formlings 11, der gebildete Spalt wieder schließt und damit das Material der Auflage 16 sicher einklemmt. Auf diese Art und Weise ist jeglicher Rand, an dem das Auflagenmaterial der Auflage 16 sich ablösen könnte, beseitigt.

Die Figuren 2a und 2b zeigen eine Variante der Fig. 2. Der Flachschieber 7a hat hier eine Stirnseite 20'', die mit der Bewegungsrichtung 37 einen Winkel bildet, der rechtwinklig oder leicht stumpf sein kann. Hierdurch kann die Stirnseite 20'' in der Stellung nach Fig. 2b die Auflage 16 im Bereich 42 der ersten Umbiegekante abstützen. Überschüssiges Material wird in der Stellung nach Fig. 2a in den Freiraum 17a des Formteils 3a gedrückt, wodurch ein Vorabtrennvorgang entfallen kann und die Entfernung des Überschußmaterials aus der Form erleichtert wird. Zur weiteren Erleichterung kann durch Öffnungen 43 im formteil 3a ein Druckstoß hindurchgeführt werden entweder mit Hilfe eines Strömungsmediums oder eines mechanischen Stößels. Während der Bearbeitung kann über die Öffnungen 43 Unterdruck herangeführt werden zum Festhalten des Überschußmaterials.

Die Figur 5 zeigt ein erfindungsgemäßes Werkzeug in ganz ähnlichem Aufbau wie Figur 1. Es kann jedoch bei dem Werkzeug nach Figur 5 die Trägerplatte 2' gleichzeitig als Druckplatte verwendet werden. Die Druckplatte 1 nach Figur 1 ist dann nicht mehr erforderlich. Weiterhin sind in Figur 5 die Formteile 3 und 5 nach Figur 1 ersetzt durch die Formteile 63 und 64, die in ihrer Formgestaltung nur geringfügig variiert sind.

In einer gemeinsamen Verschiebeebene 57 sind angeordnet und in dieser Richtung verschiebbar, ein erstes Verformungselement 48 und ein zweites Verformungselement 49. Die beiden Verformungselemente 48 und 49 weisen jeweils eine geneigte Fläche 44 bzw. 45 auf, die aneinander zur Anlage gebracht werden können. Das zweite Verformungselement 49 weist zusätzlich eine weitere geneigte Fläche 55 auf, die der ersten geneigten Gleitfläche 45 gegenüberliegend und parallel zu dieser verlaufend angeordnet ist. Eine entsprechend geneigte Gleitfläche eines Kulissenstücks 56 kann an der geneigten Gleitfläche 55 zur Anlage gebracht werden. Das Kulissenstück 56 ist befestigt am ersten Verformungselement 48: In der beschriebenen Anordnung ist zwischen dem ersten Verformungselement 48 und dem zweiten Verformungselement 49 mittels des Kulissenstücks 56 und der zugeordneten geneigten Gleitfläche 55 zwischen den beiden Verformungselementen eine formschlüssige Verbindung geschaffen, wie sie auch beispielsweise bei Kraftspannfuttern üblich ist zwischen der die notwendige Bewegung ausführenden Kolbenstange und den sich radial bewegenden Spannbacken. Anstelle der Kolbenstange ist im hier beschriebenen Ausführungsbeispiel das erste Verformungselement 48 eingesetzt und anstelle der radial beweglichen Spannbacken das zweite Verformungselement 49. Das zwischen den beiden Verformungselementen notwendige Verbindungsstück stellt das Kulissenstück 56 dar.

Die in Figur 5 dargestellte Position zeigt das geschlossene Formwerkzeug 53 in dessen Spalt 66 sich ein in Figur 5 nicht eingezeichneter Formling mit Auflage befinden soll. Hierbei ist es zunächst gleichgültig, ob das Formwerkzeug 53 diesen Formling in seiner Form erst gestaltet hat oder einen fertig geformten Formling zur weiteren Bearbeitung der Auflage übernommen hat. Erstes Verformungselement 48 und zweites Verformungselement 49 stehen in Ausgangsposition, so daß das auf der Gleitfläche 58 verschiebliche zweite Verformungselement 49 noch den Sperriegel 59 gegen die Kraft der Feder 60 in der Trägerplatte 2' versenkt hält.

Es kann nun das erste Verformungselement 48 mittels eines in Figur 5 nicht näher dargestellten Betätigungszylinders nach Art des Betätigungszylinders 36 der Figur 1, nach vorne in Richtung auf die Begrenzungsfläche 62 zu verschoben werden, wodurch die geneigten Gleitflächen 44 und 45 zur gegenseitigen Anlage kommen, so daß durch die Verschiebung des ersten Verformungselementes 48 nunmehr auch das zweite Verformungselement 49 in gleicher Richtung und vom gleichen Betätigungszylinder verschoben wird. Ist nun das zweite Verformungselement 49 in der beschriebenen Richtung genügend weit vorgeschoben, so kann der Sperriegel 59 von der Spiraldruckfeder 60 betätigt, aus der Trägerplatte 2' ausfahren solange, bis die untere Fläche der Ausnehmung 68 an der auf der Gleitfläche 58 aufliegenden unteren Fläche des zweiten Verformungselementes 49 anliegt. Die hintere Fläche der Ausnehmung 68 des Sperriegels 59 sorgt nun dafür, daß das zweite Verformungselement nicht mehr rückwärts fahren kann. Wird nun aus der vorgeschobenen Position das erste Verformungselement 48 wieder zurückgezogen, so sorgt das auf dem ersten Verformungselement 48 befestigte Kulissenstück 56 über die geneigte Gleitfläche 55 dafür, daß das zweite Verformungselement 49 an der hinteren Fläche der Ausnehmung 68 des Sperriegels 59 zur Anlage kommt und dann, bei weiterer Rückzugsbewegung des ersten Verformungselementes 48, sich in Richtung des Pfeiles 61 verschiebt, so daß dann die Schneidkante 46 des zweiten Verformungselementes 49 mit der Schneidkante 47 des Formwerkzeugs 53 zusammenarbeiten kann, so daß mindestens die Auflage 50 des Formlings 51, nachdem diese von dem ersten Verformungselement 48 gegen die Stirnseite 52 des Formlings 51 gedrückt wurde, sauber abgetrennt und weiter umgebogen wird. Die hierzu erforderlichen verschiedenen Arbeitsschritte sind in den Figuren 5 bis 7 dargestellt. Hierbei zeigt die Figur 5 a die Position 1 der Verformungselemente in der Stellung nach Einzelheit X aus Figur 5.

In Figur 6 ist die Position 2 als nächster Schritt dargestellt; Es ist dies die Position, in der das erste Verformungselement 48 genügend weit vorgefahren ist um die Auflage 50 des Formlings 51 an die Stirnseite 52 des Formlings 51 fest anzulegen und hierdurch gleichzeitig das zweite Verformungselement 49 in Arbeitsposition für den Schneidschritt zu bringen.

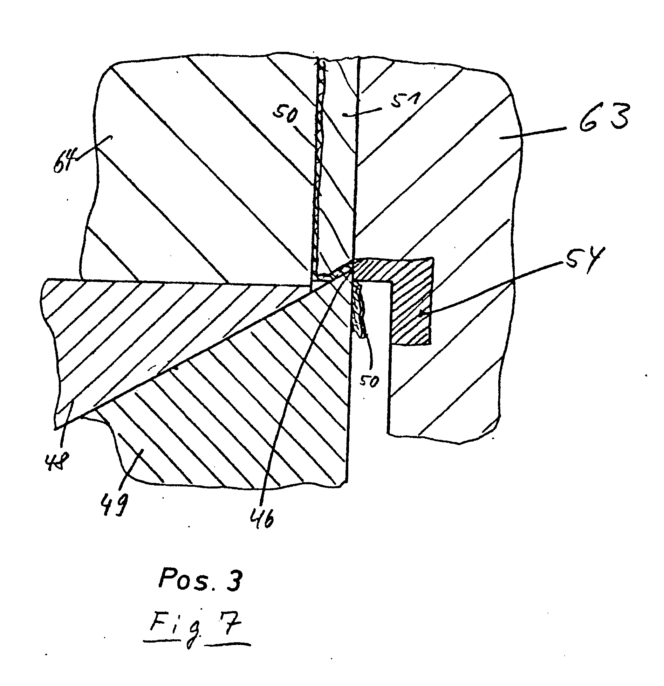

Figur 7 zeigt nun die Position 3, in welcher das erste Verformungselement 48 zurückgezogen ist und hierdurch über das Kulissenstück 56 das zweite Verformungselement 49 mit seiner Schneidkante 46 aufwärts gefahren ist, so daß in Zusammenwirken mit der Schneidkante 47 der überschüssige Teil der Auflage 50 sauber abgetrennt wurde und gleichzeitig die Auflage 50 mittels der geneigten Gleitfläche 45 noch um einen gewissen Betrag um die Stirnseite 52 des Formlings 51 umgebogen und angelegt wurde. Die Schneidkante 47 ist hierbei an einem austauschbaren Werkzeugeinsatz 54 ausgebildet, damit bei Verschleiß der Schneidkanten eine schnelle Wiederherstellung des Formwerkzeugs 53 möglich ist.

Eine Besonderheit ist noch mit der Position 2a in Figur 6a dargestellt.

Wenn der Formling 51 aus Kunststoff und die Auflage 50 aus Textilfasern besteht oder mindestens Textilfasern enthält, ist es besonders günstig, den Formling 51 in der Form 53 überstehen zu lassen an den Rändern, so daß von dem ersten Verformungselement 48, wie in Figur 6a dargestellt, ein solcher Überstand 69 mittels der Stirnfläche 67 des ersten Verformungselementes 48 gegen die Begrenzungsfläche 62 des Formteils 63 oder eines entsprechenden Bauteils angepreßt werden kann. Hierbei ist es vorteilhaft, wenn nach dieser ersten Bewegung des ersten Verformungselementes 48 der Überstand 69 noch nicht vollständig vom übrigen Formling 51 getrennt ist, sondern mit diesem noch eine Verbindung aufweist.

Durch die beschriebene Bewegung des ersten Verformungselementes 48 ist gleichzeitig in bereits beschriebener Weise die Auflage 50 an die Stirnseite 52 des Formlings 51 angelegt. Die Stirnfläche 67 des ersten Verformungselementes 48 wird nun soweit verschoben, daß der engste Abstand 65 zwischen Begrenzungsfläche 62 und Stirnfläche 67 kleiner ist als der Spalt 66 für Formling 51 mit Auflage 50. Hierdurch wird die Auflage 50 fest mit dem Überstand 69 verpreßt und haftet hierdurch fest an der Oberfläche des Überstands 69. In diesem Zustand können die Schneidkanten 46 und 47 einen besonders sauberen Trennschnitt durchführen.

Mit der beschriebenen Erfindung ist es zum ersten Mal gelungen, ein geeignetes Werkzeug vorzuschlagen, mit welchem in einem einzigen Arbeitsvorgang an einer einzigen Arbeitsstation die Auflage eines Formlings lösungssicher an dessen Rändern befestigt werden kann. Es gelingt darüber hinaus eine saubere Abtrennung sowohl des überschüssigen Auflagematerials als ggfls. auch von Überständen des Formlings. Die besondere Ausbildung der Verformungselemente und der den verschiedenen Verformungselementen und Werkzeugteilen zugeordneten Schneiden, in Verbindung mit der aufgrund der Konstruktion möglichen Scherbewegung, ermöglicht eine saubere Abtrennung selbst von aus Textilfasern bestehenden Auflagen oder von solchen Auflagen, die mindestens Textilfasern enthalten. Dies wird ermöglicht durch die erstmals bei solchen Werkzeugen verwendete besondere Schneidtechnik, die zudem den Vorteil hat, daß die Schneidkanten nur noch geringfügigem Verschleiß unterworfen sind.

Liste der verwendeten Bezugszeichen

| | |
|---|---|
| 1 | Druckplatte |
| 2 | Trägerplatte |
| 2' | Trägerplatte |
| 3 | Formteil |
| 3' | Formteil |
| 3a | Formteil |
| 4 | Distanzeintichtung |
| 5 | Formteil |
| 6 | Druckplatte |
| 7 | Flachschieber |
| 7' | Flachschieber |
| 8 | Verformungselement |
| 9 | Stirnseite |
| 9' | Stirnseite |
| 10 | Stirnseite (Formling) |
| 11 | Formling |
| 12 | Schneidkante |
| 13 | Stuhllehne |
| 14 | Rückseite |
| 15 | Stuhlfläche |
| 16 | Auflage |
| 17 | Nut |
| 17' | Nut |
| 17a | Freiraum |
| 18 | kleiner Betrag |
| 19 | Schneidkante |
| 20 | Stirnseite (Flachschieber) |
| 20' | Stirnseite (Flachschieber) |
| 20" | Stirnseite (Flachschieber) |
| 21 | Ebene der Relativverschiebung |
| 22 | Flachseite |
| 22a | Flachseite |
| 23 | Schneidkante |
| 24 | Schneidfläche |

25 Dicke (des Formlings)
26 Tragbolzen
27 Führungsbolzen
28 Bohrung
29 Bohrung
30 Führungsbüchse
31 Pfeil
32 Führungsstück
33 Mitnehmer
34 Kupplung
35 Gewindekopf
36 Betätigungszylinder
37 Pfeil
38 Anschlagblock
39 Spitze
40 Unterkante
41 Freiraum
42 Bereich
43 Öffnung
44 geneigte Gleitfläche
45 geneigte Gleitfläche
46 Schneidkante
47 Schneidkante
48 erstes Verformungselement
49 zweites Verformungselement
50 Auflage
51 Formling
52 Stirnseite Formling
53 Formwerkzeug
54 austauschbarer Werkzeugeinsatz
55 geneigte Gleitfläche
56 Kulissenstück
57 gemeinsame Verschiebeebene
58 Gleitfläche
59 Sperriegel
60 Feder
61 weitere Verschiebeebene
62 Begrenzungsfläche
63 Formteil
64 Formteil
65 engster Abstand
66 Spalt für Formling
67 Stirnfläche
68 Ausnehmung
69 Überstand
α Winkel

**Patentansprüche**

1. Verfahren zur sicheren Befestigung einer auf einer Außenfläche eines flächigen Formlings (11,51) aufgebrachten Auflage (16,50) im Bereich der Flächenränder, wobei die Auflage (16,50) mittels eines thermoplastischen Kunststoffes als Verbindungsmedium thermoplastisch oder/und über geeignete Klebemittel auf dieser Außenfläche befestigt ist, wobei mindestens die Auflage (16,50) in einer ersten Umbiegung gegen eine Stirnseite (10) des Flächenrandes gelegt wird, dadurch gekennzeichnet, daß gleichzeitig mit einer weiteren Umbiegung der Auflage der Formling (11,51), ausgehend von der Stirnseite (10), um mindestens die Dicke der Auflage (16,50) verdrängt und die Auflage gegen die durch die Verdrängung entstandene Außenfläche angelegt wird, nachdem zuvor evtl. Überstände mindestens der Auflage auf Maß abgeschnitten wurden.

2. Verfahren nach Anspruch 1, dadurch gekennzeichnet, daß nach der ersten Umbiegung die Auflage (16) etwa in einer Länge, die der Dicke (25) des Formlings (11) entspricht, abgetrennt und nachfolgend die Auflage (16) stirnseitig in den Formling (11) eingedrückt wird.

3. Verfahren nach Anspruch 1, dadurch gekennzeichnet, daß nach der ersten Umbiegung ein die Weiterverarbeitung störender Überschuß der Auflage (16) abgetrennt und danach die weitere Umbiegung durchgeführt wird.

4. Verfahren nach einem der Ansprüche 1 bis 3, dadurch gekennzeichnet, daß sich der weiteren Umbiegung ein Abtrennvorgang anschließt.

5. Verfahren nach einem der Ansprüche 1 bis 4, bei dem der Formling und die Auflage an den Rändern ein Übermaß (69) aufweisen, dadurch gekennzeichnet, daß die Auflage (50) durch Querverschiebung umgebogen wird, wobei gleichzeitig der überschüssige Werkstoff (69) des Formlings (51) ohne Abtrennung vom Formling (51) gegen eine Stützfläche (62) geschoben und mit der Auflage verpresst wird, bevor nachfolgend die Auflage neuerlich umgebogen und hierbei zusammen mit dem überschüssigen Werkstoff (69) des Formlings (51) durchschnitten wird.

6. Verfahren nach einem der Ansprüche 1 bis 5, dadurch gekennzeichnet, daß die Auflage (16,50) nach der ersten Umbiegung, jedoch vor und während der zweiten Umbiegung, im Bereich (42) der ersten Umbiegekante abgestützt wird.

7. Formwerkzeug mit einem als Formnegativ und einem als Formpositiv ausgebildeten Formteil, die relativ zueinander zum Schließen der Form verschiebbar angeordnet sind, zur Durchführung des Verfahrens nach einem der Ansprüche 1 bis 6, dadurch gekennzeichnet, daß über einer Druckplatte (1) eine Trägerplatte (2) für mindestens ein Formteil (3) und zwischen beiden mindestens eine entfernbare Distanzeinrichtung (4) angeordnet ist, während ein das Gegenstück zum Formteil (3) bildendes Formteil (5) auf einer der ersten Druckplatte (1) gegenüberliegenden weiteren Druckplatte (6) angeordnet ist und wobei ein Flachschieber (7,7') verschiebbar zwischen der Trägerplatte (2) und der zweiten Druckplatte (6) angeordnet ist und mit dieser eine Hubbewegung zur Erzeugung einer Relativbewegung zwischen dem zugeordneten Formteil (3) und einem auf der ersten Druckplatte (1) stationär angeordneten weiteren Verformungselement (8) ausüben kann, wobei der Strirnseite (20,20') des Flachschiebers (7,7') im gegenüberliegenden Formteil (3,3') eine Nut (17,17') zugeordnet ist als Freiraum für mindestens nach der ersten Umbiegung überstehendes Material der Auflage (16), deren äußere obere Kante eine Schneidkante (12) bildet und wobei das weitere Verformungselement (8) eine profilierte Stirnseite (9,9') aufweist, zur Verdrängung und Formung des Werkstoffs des Formlings (11) zusammen mit der Auflage (16).

8. Werkzeug nach Anspruch 7, dadurch gekennzeichnet, daß die äußere untere Kante der Nut (17) eine von der Stirnseite (20) des Flachschiebers (7) beaufschlagte Schneidkante (19) bildet, zum Abtrennen mindestens von stark überschüssigem Material der Auflage (16).

9. Werkzeug nach Anspruch 8, dadurch gekennzeichnet, daß die Schneidkanten (19) gegenüber der Ebene der Relativverschiebung (21) zwischen dem weiteren Verformungselement (8) und den Formteilen (3) um einen kleinen Betrag (18) zurückversetzt ist.

## Claims

1. Method for securely fixing the edge zone of a covering (16,50) applied to an external surface of a shallow moulded article (11,51), wherein the covering (16,50) is fixed to this external surface thermoplastically by means of a thermoplastic material as a connecting medium and/or by means of suitable adhesive means, wherein at least the covering (16,50) is positioned by a first bending against an end face (10) of the edge zone, characterised in that, simultaneously with a further bending of the covering, the moulded article (11,51), starting from the end face (10), is displaced by at least the thickness of the covering (16,50) and the covering is impressed against the external surface resulting from the displacement, after which, before possible trimming, at least the covering is cut off to size.

2. Method according to claim 1, characterised in that, after the first bending, the covering (16) is separated away over a length which corresponds to the thickness (25) of the moulded article (11), and subsequently the covering (16) is pressed into the end face of the moulded article (11).

3. Method according to claim 1, characterised in that, after the first bending, a surplus of the covering (16) which obstructs the further processing is cut off and thereafter the further bending is carried out.

4. Method according to one of claims 1 to 3, characterised in that a cutting off process follows the further bending.

5. Method according to one of claims 1 to 4, in which the moulded article and the covering have an excess portion (69) at the edges, characterised in that the covering (50) is bent by lateral displacement, wherein simultaneously the excess material (69) of the moulded article (51) is pushed without total separation from the moulded article (51) against a support surface (62) and is compressed with the covering, before subsequently the covering is bent again and then is cut through together with the excess material (69) of the moulded article (51).

6. Method according to one of claims 1 to 5, characterised in that the covering (16,50) is supported in the region (42) of the first bending edge after the first bending but before and during the second bending.

7. Mould tool comprising a mould part formed as a mould negative and a mould part formed as a mould positive which are arranged to be displaceable relative to one another for the closure of the mould, for carrying out the method according to one of claims 1 to 6, characterised in that above a pressure plate (1) is arranged a carrier plate (2) for at least one mould part (3) with at least one removable spacer device (4) arranged between the plates, while a mould part (5) forming the counterpart for the mould part (3) is arranged on a further pressure plate (6) which lies opposite the first pressure plate (1), and wherein a flat slide member (7,7') is arranged to be displaceable between the carrier plate (2) and the second pressure plate (6) and can exert with these a stroke movement to produce a relative movement between the associated mould part (3) and a further deformation element (8) arranged to be stationary on the first pressure plate (1), wherein the leading face (20,20') of the flat slide member (7,7') is associated in the opposite mould part (3,3') with a groove (17,17') which constitutes a free space for at least material of the groove (16) which is excess after the first bending, wherein the external upper edge of the groove forms a cutting edge (12) and wherein the further deformation element (8) has a profiled leading face (9,9') for the displacement and shaping of the material of the moulded article (11) together with the covering (16).

8. Tool according to claim 7, characterised in that the outer lower edge of the groove (17) forms a cutting edge (19) which is struck by the leading face (20) of the flat slide member (7) in order to separate away at least any greatly excess material of the covering (16).

9. Tool according to claim 8, characterised in that the cutting edge (19) is offset back by a small amount (18) in relation to the plane of the relative displacement (21) between the further deformation element (8) and the mould part (3).

## Revendications

1. Procédé pour fixer de façon sûre un revêtement (16, 50) appliqué sur une surface extérieure d'un substrat plan (11, 51), dans la zone des bords de la surface, le revêtement (16, 50) étant fixé par voie thermoplastique sur ladite surface extérieure à l'aide d'une matière thermoplastique servant d'agent de liaison ou/et par l'intermédiaire de moyens adhésifs appropriés, et le revêtement (16, 50), au moins, étant appliqué contre une face frontale (10) du bord de la surface moyennant un premier pliage, caractérisé en ce que le substrat (11, 51), en même temps qu'un second pliage du revêtement, est repoussé sur au moins l'épaisseur du revêtement (16, 50), à partir de la face frontale (10), et le revêtement est appliqué contre la surface extérieure obtenue par le repoussage, après que d'éventuelles parties saillantes du revêtement, au moins, ont été préalablement découpées sur mesure.

2. Procédé selon la revendication 1, caractérisé en ce que, après le premier pliage, le revêtement (16) est séparé sur une longueur correspondant approximativement à l'épaisseur (25) du substrat (11), puis enfoncé, du côté frontal, dans le substrat (11).

3. Procédé selon la revendication 1, caractérisé en ce que, après le premier pliage, un excédent du revêtement (16) gênant la transformation est séparé, après quoi le second pliage est réalisé.

4. Procédé selon l'une des revendications 1 à 3, caractérisé en ce que le second pliage est suivi d'une opération de séparation.

5. Procédé selon l'une des revendications 1 à 4, selon lequel le substrat et le revêtement possèdent, sur leurs bords, une partie excédentaire (69), caractérisé en ce que le revêtement (50) est replié par un déplacement transversal, la matière excédentaire (69) du substrat (51) étant poussée en même temps contre une surface d'appui (62), sans être séparée dudit substrat (51), et comprimée avec le revêtement, après quoi celui-ci est à nouveau replié et en même temps coupé avec la matière excédentaire (69) du substrat (51).

6. Procédé selon l'une des revendications 1 à 5, caractérisé en ce que le revêtement (16, 50), après le premier pliage, mais également avant et pendant le second pliage, est en appui dans la zone (42) du premier bord replié.

7. Outil de formage pour mettre en oeuvre le procédé conforme aux revendications 1 à 6, comportant des éléments de formage respectivement négatif et positif, disposés mobiles l'un par rapport à l'autre en vue de la fermeture de l'outil de formage, caractérisé en ce qu'il est prévu, au-dessus d'une plaque de compression (1), une plaque de support (2) pour un ou plusieurs éléments de formage (3) et, entre les deux plaques, un ou plusieurs dispositifs d'écartement (4) démontables, tandis qu'un élément de formage (5) formant le pendant de l'élément de formage (3) est disposé sur une seconde plaque de compression (6) opposée à la première (1), étant précisé qu'un coulisseau plat (7, 7') est disposé, mobile, entre la plaque de support (2) et la seconde plaque de compression (6), permettant ainsi un mouvement alternatif en vue de produire un mouvement relatif entre l'élément de formage (3) associé et un élément de déformation (8) prévu, fixe, sur la première plaque de compression (1), qu'il est prévu, dans l'élément de formage opposé (3, 3'), une rainure (17, 17') associée à la face frontale (20, 20') du coulisseau plat (7, 7'), servant d'espace libre pour de la matière de revêtement (16) dépassant au moins après le premier pliage, et dont l'arête supérieure extérieure définit une arête coupante (12), et que l'élément de déformation (8) possède une face frontale profilée (9, 9') destinée à repousser et à déformer la matière du substrat (11) et du revêtement (16).

8. Outil selon la revendication 7, caractérisé en ce que l'arête inférieure extérieure de la rainure (17) définit une arête coupante (19) sollicitée par la face frontale (20) du coulisseau plat (7), en vue de séparer au moins un grand excédent de matière de revêtement (16).

9. Outil selon la revendication 8, caractérisé en ce que les arêtes coupantes (19) sont placées légèrement en arrière (18) du plan de déplacement relatif (21) entre l'élément de déformation (8) et les éléments de formage (3).

Fig 1

EP 0 127 035 B1

Fig 2a

Fig 2b

Fig 2

Fig 3.

EP 0 127 035 B1

Fig 4

Fig 5

Pos. 2
Fig 6

Pos. 1
Fig 5a

Pos. 2a

Fig 6a

EP 0 127 035 B1

Pos. 3

Fig. 7